# EUROPÄISCHE PATENTSCHRIFT

(11) **EP 2 707 186 B1**
(45) Veröffentlichungstag und Bekanntmachung des Hinweises auf die Patenterteilung: **12.10.2016**
(21) Anmeldenummer: 12718998.3
(22) Anmeldetag: 04.05.2012
(51) Int. Cl.: B28B 13/02

(54) **SCHÜTTELROST FÜR EINEN FÜLLWAGEN EINER STEINFORMMASCHINE**
OSCILLATING GRATE FOR A FEED BOX OF A BLOCK MAKING MACHINE
GRILLE À SECOUSSES POUR CHARIOT DE REMPLISSAGE D'UNE MACHINE DE MOULAGE DE BLOCS

(30) Priorität: 13.05.2011 DE 102011050367
(43) Veröffentlichungstag der Anmeldung: 19.03.2014
(73) Patentinhaber: Rekers Verwaltungs GmbH & Co. KG, ., 48480 Spelle (DE)
(72) Erfinder: FOPPE, Norbert, 48480 Spelle (DE)
(74) Vertreter: von Hirschhausen, Helge
(86) Internationale Anmeldenummer: PCT/EP2012/058216
(87) Internationale Veröffentlichungsnummer: WO 2012/156212

(56) Entgegenhaltungen:
- DE-C- 927 560
- DE-U1- 7 600 208
- FR-A- 1 261 590
- JP-A- 53 061 618
- JP-A- 2003 127 128
- US-A- 5 807 591

## Beschreibung

Die vorliegende Erfindung betrifft einen Füllwagen einer Steinformmaschine mit einem Schüttelrost wobei der Schüttelrost einen Schüttelrostschlitten mit einem Schüttelrostgestänge aufweist, und der Schüttelrostschlitten mit einem Antrieb verbunden ist, wie er beispielsweise aus der DE 927560 C bekannt ist.

Aus dem Stand der Technik sind Steinformmaschinen in vielfältigen Ausführungsformen bekannt. Im Wesentlichen geht es darum, in einem getakteten Prozess eine Steinform bereitzustellen, ein Betongemenge in die Formnester der Steinform einzufüllen, das Betongemenge mit einem Stempel und/oder einer Rütteleinrichtung zu verdichten und anschließend die dadurch erstellten Betonendprodukte, die sogenannten Formlinge, zu entformen. Hierbei hat es sich bewährt, die Steinformmaschinen mit Unterlagspaletten zu beschicken und nach oben und unten offene Steinformen auf die Unterlagspaletten abzusenken. Das Betongemenge wird aus Betonbunkern in einen oder mehrere Füllwagen abgefüllt und von den Füllwagen aus in die Steinform eingelassen. Anschließend wird die Unterlagspalette mit einer Vibrationseinheit gerüttelt und/oder ein Stempel in die Steinform abgesenkt. Hierdurch wird der Beton in der Steinform verdichtet. Im nächsten Schritt werden der Stempel und die Form wieder angehoben und die Unterlagspalette mit den Formlingen wird der Steinformmaschine entnommen.

Qualität und Festigkeit der Formlinge hängen hierbei stark von der Befüllung der Steinform durch den Füllwagen ab. Da der füllstandsbedingte Materialdruck im Füllwagen während der Füllwagenfahrt bzw. während der fortschreitenden Befüllung der Steinform abnimmt, werden die in Füllrichtung hinten liegenden Formnester weniger stark befüllt. Somit ergibt sich eine ungewollte und abfallende Befüllkurve über die Breite der zu befüllenden Steinform. Dieses Problem tritt besonders dann auf, wenn hohe Steinformen bzw. schlanke befüllt werden. Die unterschiedliche Masseverteilung über die Steinform sowie die daraus resultierende Massendifferenz wirken sich negativ auf die Steindichte und Optik aus und können sich auch störend auf die Folgeprozesse auswirken.

Um diese Probleme weitestgehend zu minimieren, hat sich der Einsatz von sogenannten Schüttelrosten bewährt. Hierzu bewegt sich ein Schüttelrostschlitten mit einem Gestänge innerhalb des Füllwagens während des Befüllvorgangs im Wesentlichen horizontal hin und her. Dies bewirkt, dass sich das Rohmaterial gleichmäßig in die Steinform verteilen lässt. Die Bewegung des Schüttelrostschlittens erfolgt über einen Antrieb, der mit dem Schüttelrostschlitten verbunden ist.

Ein bekannter Schüttelrost ist etwa in der JP 2003 127 128 A gezeigt. Bei diesem weist der Schüttelrost einen Schüttelrostschlitten mit einem Schüttelrostgestänge, ein Pleuelgestänge und einen eine Drehbewegung ausführenden Antrieb auf. Das Pleuelgestänge weist einen Verbindungsstab, eine Gelenkschwinge und eine mit dem Antrieb verbundene Antriebsschwinge auf. Der Verbindungsstab ist über eine erste Gelenkverbindung am Schüttelrostschlitten befestigt. Über eine zweite Gelenkverbindung ist der Verbindungsstab an der Gelenkschwinge befestigt, wobei die Gelenkschwinge über eine dritte Gelenkverbindung an einem statischen Lager befestigt ist. Die Antriebsschwinge ist über eine vierte Gelenkverbindung an der Gelenkschwinge befestigt.

Die aus dem Stand der Technik bekannten Schüttelroste haben jedoch den Nachteil, dass die horizontale Hubkomponente des Schüttelrosts, welche nach Produktbreite bzw. Produktlänge variieren kann, nur mit einem großen Aufwand oder gar nicht eingestellt werden kann. Ferner ist auch die zur Bewegung des Rohmaterials notwendige Kraft durch die physikalischen Eigenschaften des Rohmaterials vorgegeben. Ein dichterer Beton erfordert daher einen höheren Kraftaufwand zur Bewegung. Auch dies lässt sich mit den bekannten Schüttelrosten nur bedingt oder gar nicht einstellen. Letztlich tritt auch bei den aus dem Stand der Technik bekannten Schüttelrosten ein verstärkter Verschleiß der Führungen des Schüttelrostschlittens am Füllwagen auf.

Vor diesem Hintergrund ist es die Aufgabe der Erfindung, einen Füllwagen einer Steinformmaschine mit einem Schüttelrost aufzuzeigen, der die vorgehend beschriebenen Nachteile nicht aufweist.

Die Lösung der Aufgabe gelingt mit einer Vorrichtung gemäß Anspruch 1. Vorteilhafte Weiterbildungen der Erfindung sind in den Unteransprüchen beschrieben.

Der erfindungsgemäße Füllwagen mit einem Schüttelrost unterscheidet sich von den eingangs geschilderten Füllwagen dadurch, dass der Schüttelrostschlitten horizontal in Gleitführungen geführt ist. Diese Gestaltung hat den Vorteil, dass eine Drehbewegung des Antriebs in eine Horizontalbewegung des Schüttelrosts übersetzt wird, da durch die statische Lagerung der Gelenkschwinge sowie die weiteren Gelenkverbindungen dem System im Wesentlichen ein Freiheitsgrad entzogen wird. Dadurch wird die vertikale Kraftkomponente des Schüttelrostschlittens begrenzt, was sich positiv auf die Lebensdauer der Führungen auswirkt.

Ein erfindungsgemäßer Schüttelrost hat ferner den Vorteil, dass ein vertikales Anregen der Form über die Palette mit der Rütteltischeinheit zum besseren Befüllen der Steinform mit dem Rohmaterial gänzlich entfallen könnte. Somit kann die Steinformmaschine unter optimalen Bedingungen sogar mit weniger Energieaufwand betrieben werden.

Zweckmäßigerweise weisen der Verbindungsstab und die Gelenkschwinge wenigstens zwei, vorzugsweise drei, Kopplungspunkte für die zweite Gelenkverbindung auf. Somit kann die Lage der Gelenkverbindungen verändert werden. Dies kann durch relativ einfaches Umstecken oder Umkoppeln der Gelenkverbindung erfolgen. Durch die Lageveränderung kann die horizontale Hubkomponente des Schüttelrostschlittens eingestellt werden, und gleichzeitig auch die aufgebrachte Kraft durch Änderung des Hebelweges verändert werden. Mit anderen Worten kann also die horizontale Hub- und Kraftkomponente des Schüttelrosts durch Änderung der Bewegungsgrößen verändert werden.

Es ist von Vorteil, wenn die Gelenkschwinge wenigstens zwei Kopplungspunkte für die vierte Gelenkverbindung aufweist. Somit ergeben sich weitere Einstellmöglichkeiten für die horizontale Hub- und Kraftkomponente durch Lageveränderung der Gelenkverbindung an der Gelenkschwinge. Durch eine geeignete Anzahl und Anordnung an Kopplungspunkten können sich so beispielsweise 3 x 2 unterschiedliche Kopplungsmöglichkeiten ergeben. Wird die Lage der zweiten und/oder vierten Gelenkverbindungen an der Gelenkschwinge derart verändert, dass sich deren Abstand zur dritten Gelenkverbindung erhöht, erhöht sich auch die horizontale Hubkomponente. Gleichzeitig verringert sich dadurch die horizontale Kraftkomponente. Mithin kann die horizontale Hubkomponente, welche nach Endproduktbreite bzw. -länge variieren kann, ohne großen Aufwand eingestellt werden. Ferner somit kann die horizontale Kraftkomponente des Schüttelrosts auf eine Vielzahl verschiedener Betongemenge angepasst werden. Eine Anpassung des Schüttelrosts auf eine Vielzahl von Steinformen und folglich auch auf die zu erstellenden Formlinge ist somit also ohne großen Aufwand möglich.

Vorteilhafterweise weist der Verbindungsstab eine L-förmige oder T-förmige Lasche auf, wobei die Kopplungspunkte für die zweite Gelenkverbindung im Bereich der Lasche angeordnet sind. Eine derartige Anordnung spart Bauraum und ermöglicht eine einfache und sichere Kopplung des Verbindungsstabes mit der Gelenkschwinge.

Zweckmäßigerweise ist die Antriebsschwinge eine Exzenterschwinge. Dies hat den Vorteil, dass über die Exzenterschwinge eine Drehbewegung in eine horizontale bzw. gradlinige Bewegung übersetzt wird. Dadurch wird eine vertikale Hubkomponente und eine damit einhergehende vertikale Kraftkomponente, die auf die Führungen des Schüttelrostschlittens wirken würden, im Wesentlichen vermieden.

Als Antrieb kann jeder denkbare Antrieb wie etwa Elektromotoren oder Hydromotoren verwendet werden. Vorzugsweise ist der Antrieb ein Hydromotor. Hydromotoren haben den Vorteil, dass sie Bauraum sparen und ein hohes Drehmoment aufweisen. Durch einen Hydromotor kann eine so große Kraft bereitgestellt werden, wie dies durch Elektromotoren gleicher Baugröße nicht möglich ist. Ferner kann die Drehzahl für den hydraulischen Motor zum Beispiel mittels Drosselventil eingestellt werden. Ein weiterer Vorteil von Hydromotoren besteht darin, dass das aufzubringende Drehmoment ohne Änderung der Drehzahl eingestellt werden kann.

Es ist von Vorteil, wenn die Gelenkverbindungen als Bolzenverbindungen, insbesondere als Steckbolzenverbindungen und / oder Schraubbolzenverbindungen, ausgeführt sind. Bolzenverbindungen erlauben ein einfaches und schnelles Umkoppeln der Gelenkverbindungen. Somit kann durch Umstecken der Bolzen von einem Kopplungspunkt in einen anderen Kopplungspunkt die horizontale Hub- und Kraftkomponente des Schüttelrostschlittens auf einfache Art und Weise eingestellt werden. Da die erste und dritte Gelenkverbindung in der Regel jedoch nicht umgekoppelt werden, ist es denkbar, dass diese Gelenkverbindungen als Schraubverbindungen oder dergleichen ausgeführt sind.

Grundsätzlich kann ein Schüttelrostschlitten in beliebiger Weise im Füllwagen angeordnet sein, z. B. können auch ein oder zwei Schüttelrostschlitten links und / oder rechts angeordnet sein. Vorteilhafterweise ist ein Schüttelrostschlitten mittig im Füllwagen angeordnet. Durch die mittige Anordnung des Schüttelrostschlittens ergibt sich eine optimale Einwirkung auf das Rohmaterial und somit eine gleichmäßige Befüllung der Formnester der Steinform durch die Bewegung des Schüttelrosts.

Erfindungsgemäß wird der Schüttelrostschlitten horizontal in einer Gleitführung z. B. einer Gleitbuchse, Kugellinearführung, etc geführt. Aufgrund der erfindungsgemäßen Reduzierung der vertikalen Kraftkomponente kann dabei mit einer Gleitführung gearbeitet werden, die ohne zusätzliche Schmierstoffe auskommt.

Es ist von Vorteil, wenn das Schüttelrostgestänge lösbar am Schüttelrostschlitten befestigt ist. Dies hat den Vorteil, dass durch Umsetzen oder Auswechseln des Gestänges des Schüttelrosts eine weitere produktspezifische Anpassung erfolgen kann. Dies erhöht die Variabilität und Qualität hinsichtlich der Befüllung der Formnester mit Rohmaterial nochmals.

Nachfolgend wird die Erfindung anhand eines in der Zeichnung gezeigten Ausführungsbeispiels näher erläutert. Darin zeigen schematisch:
- Fig. 1: ein perspektivische Ansicht einer Steinformmaschinen; und
- Fig. 2: eine Seitenansicht eines Füllwagens mit einem erfindungsgemäßen Schüttelrost.

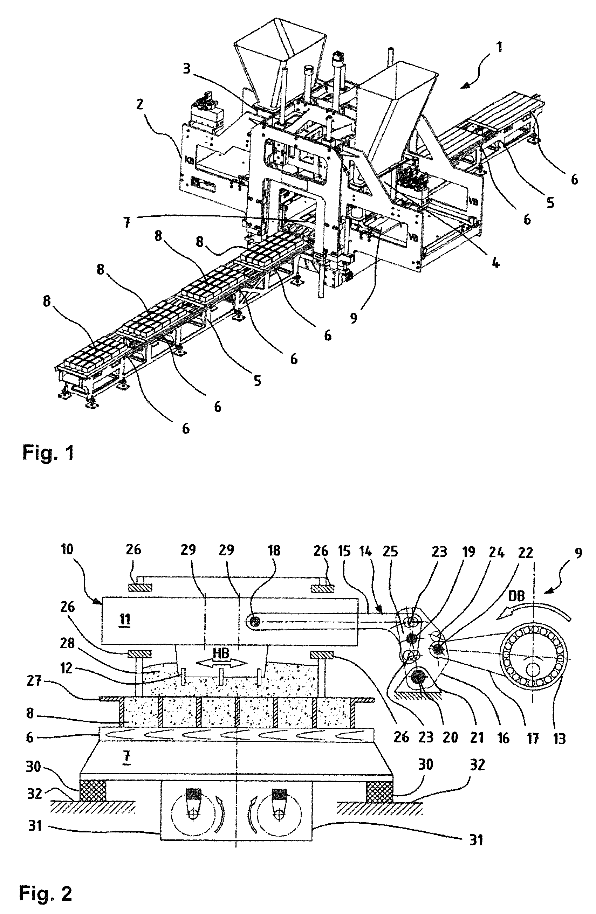

In Fig. 1 ist eine Steinformmaschine 1 in perspektivischer Ansicht dargestellt. Die Steinformmaschine 1 umfasst einen beweglichen Hauptrahmen 2, der auf einem statischen Rahmen 32 befestigt und geführt ist und an dem seitlich zwei Betonbunker 3, 4 angeordnet sind. Der erste Bunker 3 dient zur Aufnahme des sogenannten Kernbetons und der zweite Bunker 4 dient zur Aufnahmen des sogenannten Vorsatzbetons. Da der Vorsatzbeton in der Regel als dünne Deckschicht auf den Kernbeton aufgebracht wird, weist der Vorsatzbetonbunker 4 ein kleineres Volumen als der Kernbetonbunker 3 auf.

Die Steinformmaschine 1 wird über eine Beförderungseinrichtung 5 taktweise mit Unterlagspaletten 6 beschickt. Die Unterlagspaletten 6 kommen auf einem zentral in der Steinformmaschine 1 angeordneten Rütteltisch 7 zum Stehen und dienen zur Aufnahme der Formlinge 8.

Unterhalb der Betonbunker 3, 4 ist jeweils ein in Fig. 2 näher dargestellter Füllwagen 9 angeordnet. Der Füllwagen 9 wird über eine Befüllvorrichtung mit Beton aus den Bunkern 3, 4 befüllt und über einen Antrieb in Richtung der stehenden Unterlagspalette 6 bzw. des Rütteltisches 7 bewegt. Dort wird der im Füllwagen befindliche Beton in die Formnester einer auf die Unterlagspalette 6 abgesenkten Steinform eingebracht.

Nachdem die Steinform mit Beton aus dem Füllwagen 9 befüllt wurde, kann der Beton in der Steinform über einen Stempel und/oder durch Bewegung des Rütteltischs 7 verdichtet werden. Hierzu ist der Rütteltisch 7, wie in Fig. 2 gezeigt, über Schwingmetalle 30 am statischen Rahmen 32 der Steinformmaschine 1 befestigt. Die Bewegung des Rütteltischs 7 erfolgt über zwei unterhalb des Rütteltischs 7 angeordnete Unwuchtvibratoren 31. In diesem Ausführungsbeispiel haben die Unwuchtvibratoren 31 entgegengesetzte Drehrichtungen, wie es durch die entsprechenden Pfeile angedeutet wird.

Danach wird die Steinform angehoben und die Unterlagspalette 6 mit den Formlingen 8 wird über die Beförderungseinrichtung 5 entnommen.

Wie bereits erwähnt zeigt Fig. 2 einen Füllwagen 9 mit einem erfindungsgemäßen Schüttelrost 10, der in der in Fig. 1 gezeigten Steinformmaschine 1 zum Einsatz kommt. Der Schüttelrost 10 weist einen Schüttelrostschlitten 11 und ein Schüttelrostgestänge 12 auf und ist mittig im Füllwagen 9 angeordnet. Zur Bewegung des Schüttelrosts 10 ist dieser über ein Pleuelgestänge 14 mit einem Antrieb 13 verbunden.

Das Pleuelgestänge 14 umfasst einen Verbindungsstab 15, eine Gelenkschwinge 16 und eine mit dem Antrieb 13 verbundene Antriebsschwinge 17, die in Form einer Exzenterschwinge ausgeführt ist. Der Verbindungsstab 15 ist über eine erste Gelenkverbindung 18 mit dem Schüttelrostschlitten 11, und über eine zweite Gelenkverbindung 19 mit der Gelenkschwinge 16 verbunden. Die Gelenkschwinge 16 ist mit einer dritten Gelenkverbindung 20 drehbar mit einem statischen Lager 21 verbunden. Das statische Lager 21 ist Teil des Rahmens des Füllwagens 9.

Über eine vierte Gelenkverbindung 22 ist die Gelenkschwinge 16 mit der Antriebsschwinge 17 verbunden.

Für den Einsatz als Antrieb 13 eignet sich insbesondere ein Hydromotor, der ein hohes Drehmoment von 900 Nm bei kleiner Baugröße bereitstellen kann.

Der Schüttelrostschlitten 11 wird horizontal in als Gleitbuchse ausgebildeten Gleitführungen 26 geführt, die am Rahmen des Füllwagens 9 angeordnet sind. Durch die beschriebene Anordnung wird eine durch den Antrieb 13 erzeugte Drehbewegung DB in eine Horizontalbewegung HB des Schüttelrostschlittens 11 umgewandelt, wie dies auch durch die entsprechenden Pfeile angedeutet ist.

Um die horizontale Hub- und Kraftkomponente des Schüttelrostschlittens 11 einstellen zu können, weisen der Verbindungsstab 15 und die Gelenkschwinge 16 drei Kopplungspunkte 23 für die zweite Gelenkverbindung 19 auf. Hierzu hat der Verbindungsstab 15 an seinem dem Antrieb 13 zugewandten Ende eine L-förmige Lasche 25, in deren Bereich die Kopplungspunkte 23 der zweiten Gelenkverbindung 19 angeordnet sind. Die Gelenkschwinge 16 weist hierzu korrespondierende Kopplungspunkte 23 auf. Ferner weist die Gelenkschwinge 16 zwei Kopplungspunkte 24 für die vierte Gelenkverbindung 22 auf. In der Darstellung gemäß Fig. 2 ist der Verbindungsstab 15 am mittleren Kopplungspunkt 19 an die Gelenkschwinge 16 gekoppelt. Ferner ist die Antriebsschwinge 17 am unteren Kopplungspunkt 24 an die Gelenkschwinge 16 gekoppelt. Um ein schnelles Umsetzen der zweiten und vierten Gelenkverbindung 19, 22 zu ermöglichen, sind diese als Steckbolzenverbindungen mit lösbarem Sicherungsmittel ausgeführt. Durch einfaches Umsetzen der Steckbolzen der Gelenkverbindungen 19, 22 ergeben sich somit 3 x 2 Übersetzungsmöglichkeiten der Drehbewegung DB des Antrieb 13 in eine Horizontalbewegung HB des Schüttelrostschlittens 11 bzw. in die horizontale Kraftkomponente des Schüttelrostschlittens 11.

Ausgehend von einer gleichbleibenden Drehzahl und einem gleichbleibendem Drehmoment des Antriebs 13, kann je nach Breite bzw. Länge der verwendeten Steinform 27 die horizontale Hub- und Kraftkomponente des Schüttelrostschlittens 11 verändert werden. Beispielsweise kann die horizontale Hubkomponente des Schüttelrostschlittens 11 durch Umstecken des Verbindungsbolzens der zweiten Gelenkverbindung 19 in den untersten Kopplungspunkt 23 verringert werden. Gleichzeitig erhöht sich dadurch die horizontale Kraftkomponente.

Das Gegenteil wird erreicht, wenn der Verbindungsbolzen der zweiten Gelenkverbindung 19 in den obersten Kopplungspunkt 23 umgesteckt wird. Die horizontale Hubkomponente erhöht sich, wobei gleichzeitig die horizontale Kraftkomponente verringert wird.

Die besagte Horizontalbewegung HB des Schüttelrostschlittens 11 bewirkt, dass sich das Rohmaterial 28 optimal und gleichmäßig in die Formnester der auf die Unterlagspalette 6 abgesenkten Steinform 27 verteilen lässt. In diesem Ausführungsbeispiel weist die Steinform 27 sechs Formnester pro Reihe auf, jedoch ist der erfindungsgemäße Schüttelrost 10 flexibel auf eine Vielzahl von Steinformen 27 mit variabler Breite, Länge, Tiefe und Anzahl an Formnestern einstellbar.

Das Schüttelrostgestänge 12 kann durch Lösen der Verbindungen 29 vom Schüttelrostschlitten 11 gelöst und somit ausgewechselt, umgesetzt oder in der Höhe verstellt werden, wodurch sich die Variabilität und Flexibilität des erfindungsgemäßen Schüttelrosts 10 nochmals erhöht. Die Verbindungen 29 zwischen Schüttelrostschlitten 11 und Schüttelrostgestänge 12 können beispielsweise als Schraubverbindungen oder dergleichen ausgeführt sein.

### Bezugszeichenliste

- 1: Steinformmaschine
- 2: Beweglicher Hauptrahmen
- 3: Kernbetonbunker
- 4: Vorsatzbetonbunker
- 5: Beförderungseinrichtung
- 6: Unterlagspalette
- 7: Rütteltisch
- 8: Formling
- 9: Füllwagen
- 10: Schüttelrost
- 11: Schüttelrostschlitten
- 12: Schüttelrostgestänge
- 13: Antrieb
- 14: Pleuelgestänge
- 15: Verbindungsstab
- 16: Gelenkschwinge
- 17: Antriebsschwinge
- 18: erste Gelenkverbindung
- 19: zweite Gelenkverbindung
- 20: dritte Gelenkverbindung
- 21: statisches Lager
- 22: vierte Gelenkverbindung
- 23: Kopplungspunkt
- 24: Kopplungspunkt
- 25: Lasche
- 26: Gleitführung
- 27: Steinform
- 28: Rohmaterial
- 29: Verbindung
- 30: Schwingmetall
- 31: Unwuchtvibrator
- 32: Statischer Rahmen
- DB: Drehbewegung
- HB: Horizontalbewegung

## Patentansprüche

1. Füllwagen (9) einer Steinformmaschine (9), wobei der Füllwagen (9) einen Schüttelrost (10), ein Pleuelgestänge (14) und einen eine Drehbewegung (DB) ausführenden Antrieb (13) aufweist, wobei der Schüttelrost (10) einen Schüttelrostschlitten (11) mit einem Schüttelrostgestänge (12) aufweist, und der Schüttelrostschlitten (11) über das Pleuelgestänge (14) mit dem die Drehbewegung (DB) ausführenden Antrieb (13) verbunden ist, wobei das Pleuelgestänge (14) einen Verbindungsstab (15), eine Gelenkschwinge (16) und eine mit dem Antrieb verbundene Antriebsschwinge (17) aufweist,
wobei der Verbindungsstab (15) über eine erste Gelenkverbindung (18) am Schüttelrostschlitten (11) befestigt ist, und der Verbindungsstab (15) über eine zweite Gelenkverbindung (19) an der Gelenkschwinge (16) befestigt ist, und die Gelenkschwinge (16) über eine dritte Gelenkverbindung (20) an einem statischen Lager (21) befestigt ist, und die Antriebsschwinge (17) über eine vierte Gelenkverbindung (22) an der Gelenkschwinge (16) befestigt ist, **dadurch gekennzeichnet, dass** der Schüttelrostschlitten (11) horizontal in Gleitführungen (26) geführt ist, sodass eine Übersetzung der Drehbewegung (DB) des Antriebs (13) in eine Horizontalbewegung (HB) des Schüttelrostschlittens (11) erfolgt.

2. Füllwagen (9) nach Anspruch 1,
**dadurch gekennzeichnet, dass**
der Verbindungsstab (15) und die Gelenkschwinge (16) wenigstens zwei, vorzugsweise drei, Kopplungspunkte (23) für die zweite Gelenkverbindung (19) aufweisen.

3. Füllwagen (9) nach Anspruch 1 oder 2,
**dadurch gekennzeichnet, dass**
die Gelenkschwinge (16) wenigstens zwei Kopplungspunkte (24) für die vierte Gelenkverbindung (22) aufweist.

4. Füllwagen (9) nach Anspruch 2 oder 3,
**dadurch gekennzeichnet, dass**
der Verbindungsstab (15) eine L-förmige oder T-förmige Lasche (25) aufweist, wobei im Bereich der Lasche (25) die Kopplungspunkte (23) für die zweite Gelenkverbindung (19) angeordnet sind.

5. Füllwagen (9) nach einem der vorhergehenden Ansprüche,
**dadurch gekennzeichnet, dass**
die Antriebsschwinge (17) eine Exzenterschwinge ist.

6. Füllwagen (9) nach einem der vorhergehenden Ansprüche,
**dadurch gekennzeichnet, dass**
der Antrieb (13) ein Hydromotor und / oder Elektromotor ist.

7. Füllwagen (9) nach einem der vorhergehenden Ansprüche,
**dadurch gekennzeichnet, dass**
die Gelenkverbindungen (18, 19, 20, 22) Bolzenverbindungen sind.

8. Füllwagen (9) nach einem der vorhergehenden Ansprüche,
**dadurch gekennzeichnet, dass**
der Schüttelrostschlitten (11) mittig im Füllwagen (9) angeordnet ist.

9. Füllwagen (9) nach einem der vorhergehenden Ansprüche,
**dadurch gekennzeichnet, dass**
das Schüttelrostgestänge (12) lösbar am Schüttelrostschlitten (11) befestigt ist.

## Claims

1. A feed box (9) of a block making machine (1), wherein the feed box (9) includes an oscillating grate (10), a connecting rod (14) and an actuator (13) performing a rotary motion (DB), wherein the oscillating grate (10) includes an oscillating grate carriage (11) with an oscillating grate linkage (12), and the oscillating grate carriage (11) is connected via the connecting rod (14) to the actuator (13) performing the rotary motion (DB), wherein the connecting rod (14) includes a connecting bar (15), a joint rocker (16) and a drive rocker (17) connected to the actuator, wherein the connecting bar (15) is fastened via a first joint connection (18) to the oscillating grate carriage (11) and the connecting bar (15) is fastened via a second joint connection (19) to the joint rocker (16) and the joint rocker (16) is fastened via a third joint connection (20) to a static bearing (21) and the drive rocker (17) is fastened via a fourth joint connection (22) to the joint rocker (16), **characterised in that** the oscillating grate carriage is guided horizontally in sliding guides (26) so that a conversion of the rotary motion (DB) of the actuator (13) into a horizontal motion (HB) of the oscillating grate carriage (11) occurs.

2. A feed box (9) as claimed in Claim 1, **characterised in that** the connecting bar (15) and the joint rocker (16) include at least two, preferably three, coupling points (23) for the second joint connection (19).

3. A feed box (9) as claimed in Claim 1 or 2, **characterised in that** the joint rocker (16) includes at least two coupling points (24) for the fourth joint connection (22).

4. A feed box (9) as claimed in Claim 2 or 3, **characterised in that** the connecting bar (15) includes an L-shaped or T-shaped link (25), wherein the coupling points (23) for the second joint connection (19) are arranged in the region of the link (25).

5. A feed box (9) as claimed in one of the preceding claims, **characterised in that** the drive rocker (17) is an eccentric rocker.

6. A feed box (9) as claimed in one of the preceding claims, **characterised in that** the actuator (13) is a hydraulic motor and/or electric motor.

7. A feed box (9) as claimed in one of the preceding claims, **characterised in that** the joint connections (18, 19, 20, 22) are pin connections.

8. A feed box (9) as claimed in one of the preceding claims, **characterised in that** the oscillating grate carriage (11) is arranged centrally in the feed box (9).

9. A feed box (9) as claimed in one of the preceding claims, **characterised in that** the oscillating grate linkage (12) is releasably fastened to the oscillating grate carriage (11).

## Revendications

1. Chariot de remplissage (9) d'une machine de mise en forme de blocs de pierre (9), le chariot de remplissage (9) présentant une grille à secousses (10), une tringlerie à bielle (14) et un entraînement (13) exécutant un mouvement de rotation (DB), la grille à secousses (10) présentant un coulisseau (11) de grille à secousses avec une tige (12) de grille à secousses, et le coulisseau (11) de la grille à secousses étant relié à l'entraînement (13) exécutant le mouvement de rotation (DB) par l'intermédiaire de la tringlerie à bielle (14), la tringlerie à bielle (14) présentant une barre de liaison (15), une bielle oscillante articulée (16) et une bielle oscillante d'entraînement (17), laquelle est reliée à l'entraînement, la barre de liaison (15) étant fixée au coulisseau (11) de la grille à secousses par l'intermédiaire d'une première liaison articulée (18), et la barre de liaison (15) étant fixée à la bielle oscillante articulée (16) par l'intermédiaire d'une deuxième liaison articulée (19), et la bielle oscillante articulée (16) étant fixée à un palier statique (21) par l'intermédiaire d'une troisième liaison articulée (20), et la bielle oscillante d'entraînement (17) étant fixée à la bielle oscillante articulée (16) par l'intermédiaire d'une quatrième liaison articulée (22),
**caractérisé en ce que**
le coulisseau (11) de la grille à secousses est guidé à l'horizontale dans des glissières de guidage (26), de telle sorte qu'une conversion du mouvement de rotation (DB) de l'entraînement (13) a lieu en un mouvement horizontal (HB) du coulisseau (11) de la grille à secousses.

2. Chariot de remplissage (9) selon la revendication 1,
**caractérisé en ce que**
la barre de liaison (15) et la bielle oscillante'articulée (16) présentent au moins deux, de préférence trois points de couplage (23) pour la deuxième liaison articulée (19).

3. Chariot de remplissage (9) selon la revendication 1 ou 2,
**caractérisé en ce que**
la bielle oscillante articulée (16) présente au moins deux points de couplage (24) pour la quatrième liaison articulée (22).

4. Chariot de remplissage (9) selon la revendication 2 ou 3,
**caractérisé en ce que**
la barre de liaison (15) présente une languette (25) en forme de L ou en forme de T, les points de couplage pour la deuxième liaison articulée (19) étant disposés dans la zone de la languette (25).

5. Chariot de remplissage (9) selon l'une des revendications précédentes,
**caractérisé en ce que**
la bielle oscillante d'entraînement (17) est une bielle oscillante à excentrique.

6. Chariot de remplissage (9) selon l'une des revendications précédentes,
**caractérisé en ce que**
l'entraînement (13) est un moteur hydraulique et/ou un moteur électrique.

7. Chariot de remplissage (9) selon l'une des revendications précédentes,
**caractérisé en ce que**
les liaisons articulées (18, 19, 20, 22) sont des raccords à boulons.

8. Chariot de remplissage (9) selon l'une des revendications précédentes,
**caractérisé en ce que**
le coulisseau (11) de la grille à secousses est disposé au centre dans le chariot de remplissage (9).

9. Chariot de remplissage (9) selon l'une des revendications précédentes,
**caractérisé en ce que**
la tige (12) de la grille à secousses est fixée de manière amovible au coulisseau (11) de la grille à secousses.
